# EUROPEAN PATENT APPLICATION

(11) **EP 4 383 150 A1**
(43) Date of publication of application: **12.06.2024**
(21) Application number: 22853206.5
(22) Date of filing: 05.08.2022
(51) Int. Cl.: G06N 20/00

(54) **TRAINED MODEL MANAGEMENT DEVICE AND TRAINED MODEL MANAGEMENT METHOD**

(30) Priority: 05.08.2021 JP 2021129344
(71) Applicant: Kyocera Corporation, Kyoto-shi Kyoto 612-8501 (JP); Rist Inc., Kyoto-shi, Kyoto 600-8102 (JP)
(72) Inventor: NAKAMURA Masayoshi, Kyoto-shi, Kyoto 612-8501 (JP); TSUTSUMI Masafumi, Kyoto-shi, Kyoto 612-8501 (JP); IZUMI Tomoyuki, Kyoto-shi, Kyoto 612-8501 (JP); FURUKAWA Kohei, Kyoto-shi, Kyoto 612-8501 (JP); MURAOKA Satoshi, Kyoto-shi, Kyoto 612-8501 (JP); KABASAWA Tatsumasa, Kyoto-shi, Kyoto 600-8102 (JP)
(74) Representative: TBK
(86) International application number: PCT/JP2022/030203
(87) International publication number: WO 2023/013788

(57) **Abstract**

A trained model management device and a trained model management method that update master models without degrading recognition accuracy in the use environment of a user. The trained model management device (10) includes: a first storage (12A) storing first training data and a first model that is a trained model that has been trained to recognize, based on the first training data, a target object included in input information; a second storage (12B) storing second training data and a second model that is a trained model generated based on the second training data and the first model; and an update determination unit (132) that makes a determination as to whether or not to update the first model based on the second learning data when the second model is generated.

## Description

### CROSS-REFERENCE TO RELATED APPLICATION

The present application claims priority to and the benefit of Japanese Patent Application No. 2021-129344 filed August 5, 2021, the entire contents of which are incorporated herein by reference.

### TECHNICAL FIELD

The present disclosure relates to a trained model management device and a trained model management method.

### BACKGROUND

Conventional devices are known that identify objects in images by machine learning, using training images. For example, Patent Literature (PTL) 1 describes a system that delivers to a vehicle, via a network, a recognition model that is updated (retrained) with a simulation video that reproduces a scene in which recognition failed.

### CITATION LIST

### Patent Literature

PTL 1: JP 2021-043622 A

### SUMMARY

A trained model management device according to an embodiment of the present disclosure comprises:
a first storage storing first training data and a first model that is a trained model that has been trained to recognize, based on the first training data, a target object included in input information;
a second storage storing second training data and a second model that is a trained model generated based on the second training data and the first model; and
an update determination unit that makes a determination as to whether or not to update the first model based on the second training data when the second model is generated.

A trained model management method according to an embodiment of the present disclosure is
a trained model management method executed by a trained model management device comprising: a first storage storing first training data and a first model that is a trained model that has been trained to recognize, based on the first training data, a target object included in input information; and a second storage storing second training data and a second model that is a trained model generated based on the second training data and the first model, the trained model management method comprising:
determining whether or not to update the first model based on the second training data when the second model is generated.

### BRIEF DESCRIPTION OF THE DRAWINGS

In the accompanying drawings:
FIG. 1 is a diagram illustrating an example configuration of a trained model management system including a trained model management device according to an embodiment;
FIG. 2 is a schematic diagram illustrating an example configuration of a robot control system;
FIG. 3 is a diagram illustrating an example configuration of a model group provided as a library;
FIG. 4 is a sequence diagram illustrating an example of processing procedure in a trained model management system; and
FIG. 5 is a sequence diagram following FIG. 4.

### DETAILED DESCRIPTION

The following describes a trained model management device and a trained model management method according to an embodiment of the present disclosure, with reference to the drawings. In each drawing, identical or equivalent parts are marked with the same reference sign. In description of the present embodiment, description of identical or equivalent parts is omitted or simplified as appropriate.

### (Trained model management system overview)

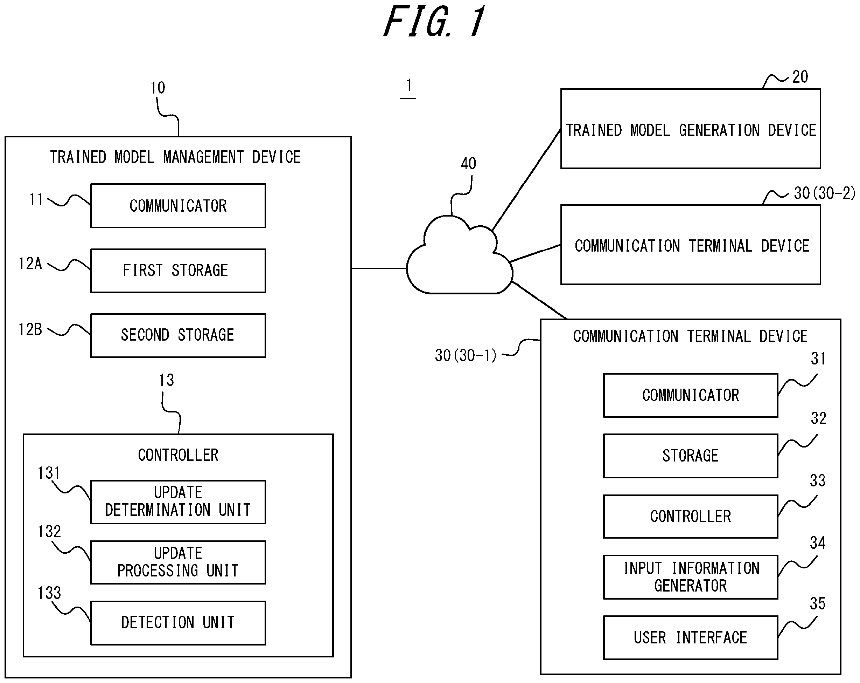

FIG. 1 illustrates an example configuration of a trained model management system 1 including a trained model management device 10 according to the present embodiment. The trained model management device 10 is a device that manages updates and the like of trained models provided as a library. A user uses the trained models for tasks such as, for example, object identification and display of identification results. Further, the trained model management device 10 is able to execute a task using evaluation data and a specific model provided by a user, and output an execution result. According to the present embodiment, a model group includes a plurality of machine learning models (trained models) that have been generated to recognize a target object by machine learning. A user may download and use a trained model via a network 40, for example.

The trained model management device 10 includes a communicator 11, a first storage 12A, a second storage 12B, and a controller 13. The controller 13 includes an update determination unit 131, an update processing unit 132, and a detection unit 133. The trained model management device 10 may be a computer, such as a server or the like, as a hardware configuration. Details of the components of the trained model management device 10 are described later.

The trained model management device 10, together with a trained model generation device 20 and a communication terminal device 30 connected by the network 40, may constitute the trained model management system 1. The network 40 is, for example, the Internet, but may be a local area network (LAN). For example, the trained model management device 10 and the trained model generation device 20 may communicate via LAN, and the trained model management device 10 and the communication terminal device 30 may communicate via the Internet.

The trained model generation device 20 is able to generate master models and custom models through machine learning, as described later. That is, the trained model generation device 20 is able to generate a trained model by machine learning using training data such as first training data and second training data described later. Further, the trained model generation device 20 generates a new trained model (for example, a custom model, as described later). Further, the trained model generation device 20 may execute an update (retraining) of a specified model by adding new training data. Training data may be created by capturing an image with a camera or the like, and may be created by using computer aided design (CAD) data. Further, training data may be created by combining training data from image capture and training data from CAD.

According to the present embodiment, the trained model generation device 20 has access to the first storage 12A and the second storage 12B of the trained model management device 10. Further, according to the present embodiment, the trained model generation device 20 is a computer separate from the trained model management device 10 that is able to communicate with the trained model management device 10, but is not limited to such a configuration. For example, the trained model generation device 20 may be realized by a computer integrated with the trained model management device 10. In such a case, the trained model generation device 20 may include the components of the trained model management device 10, and the trained model management device 10 may include the components of the trained model generation device 20.

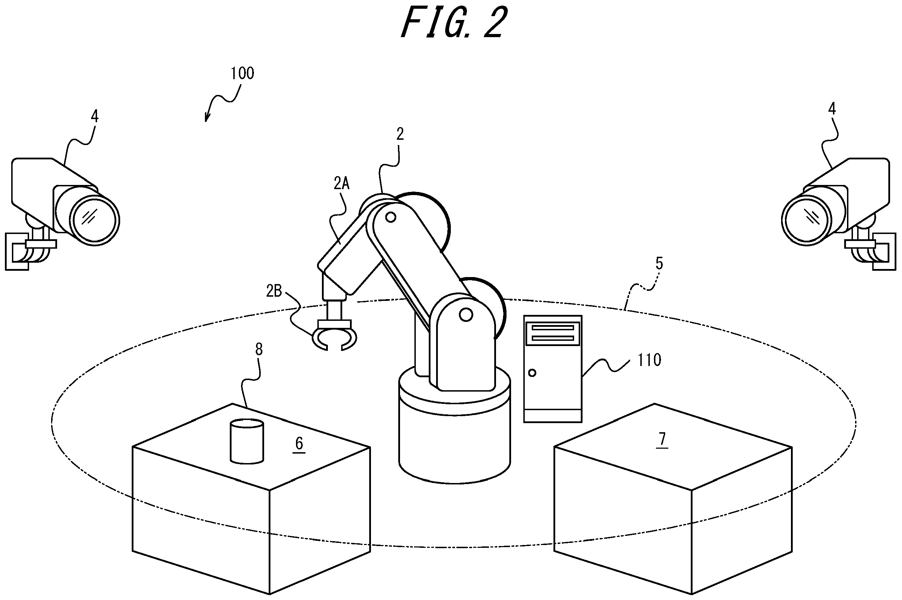

The communication terminal device 30 is a general-purpose communication terminal such as, but not limited to, a smartphone, a tablet device, or the like. The communication terminal device 30 may, as another example, be part of a robot control system 100 (see FIG. 2) described later. The communication terminal device 30 generates input information (for example, an image of an identification target object) and outputs the input information to the trained model management device 10. Input information may be used as evaluation data to evaluate an updated model. The communication terminal device 30 outputs the training data provided by a user to the trained model management device 10. Further, the communication terminal device 30 may present to a user an execution result of a task executed by the trained model management device 10 using the evaluation data and the specific model. The communication terminal device 30 includes a communicator 31, a storage 32, a controller 33, an input information generator 34, and a user interface 35. Details of components of the communication terminal device 30 are described later.

Here, according to the present embodiment, users of the trained model management system 1 include a first user and a second user. The first user is able to use a communication terminal device 30-1 to, for example, generate a custom model unique to the first user. Further, the second user is able to use a communication terminal device 30-2 to, for example, generate a custom model unique to the second user. The communication terminal device 30-2 may have the same configuration as the communication terminal device 30-1. According to the present embodiment, the communication terminal device 30-1 and the communication terminal device 30-2 have the same configuration and are hereinafter also described as the communication terminal device 30 when not specifically distinguished.

FIG. 2 is a schematic diagram illustrating an example configuration of the robot control system 100. The robot control system 100 includes a robot 2 and a robot control device 110. The robot 2 moves a work target object 8 from a work start point 6 to a work target point 7 by means of an end effector 2B (grasping hand) at the end of an arm 2A. That is, the robot control device 110 controls the robot 2 so that the work target object 8 moves from the work start point 6 to the work target point 7. The robot control system 100 includes a camera 4. The camera 4 captures images of items and the like in an influence zone 5 that may affect operation of the robot 2.

The robot control device 110 recognizes the work target object 8 present in a space where the robot 2 works based on images captured by the camera 4. Recognition of the work target object 8 is executed using a model included in the model group (trained model able to recognize the work target object 8). The robot control device 110 downloads and deploys a trained model via the network 40 before executing recognition of the work target object 8.

Here, models provided as a library are preferably able to recognize various types of the work target object 8 to suit the requirements of, for example, the robot control system 100 of many different users. Therefore, the trained model management device 10 preferably updates a trained model that is a master model included in the model group so that a new product may be recognized as the target object, for example. Here, for example, when a user wants to quickly include a new product as a recognition target, the user may prepare training data on the new product and generate a custom model using a function of the trained model generation device 20. Such a user may want to continue to use the custom model that has a proven track record of recognition accuracy, even after a master model is updated. Therefore, the trained model management device 10 also preferably continues to allow the use of custom models in the use environment of a user, without forced replacement with a master model.

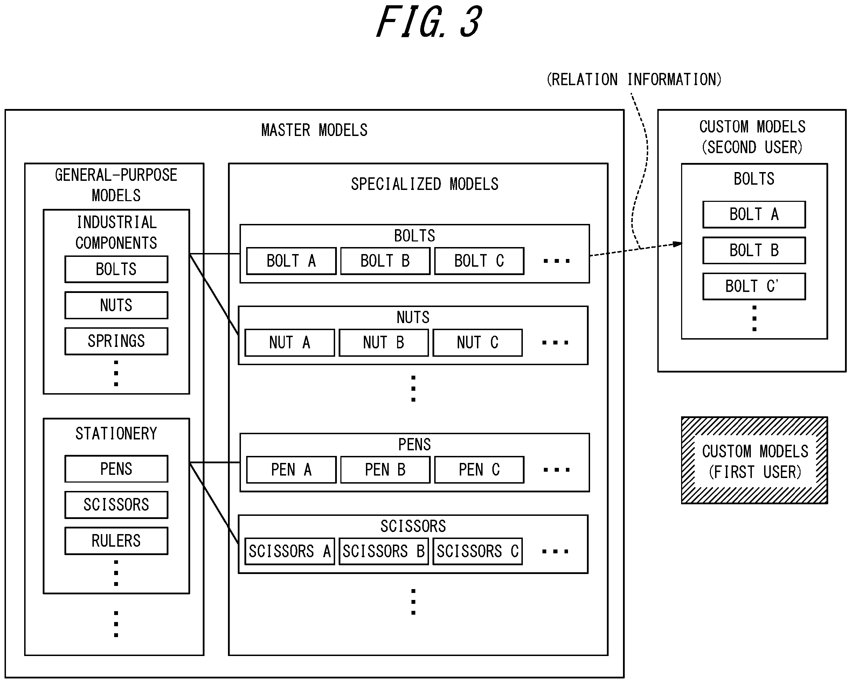

As described below, the trained model management device 10 is able to update a master model to expand recognition targets, using the training data used in generating a custom model. Further, after confirming an instruction to change from the custom model of a user to a master model, the trained model management device 10 sets the master model after the update to be used in the use environment of the user. Details of master models and custom models are described later, with reference to FIG. 3. Further, according to the present embodiment, the communication terminal device 30 is a tablet device held by a user, but a part of the robot control system 100 (the robot control device 110, the camera 4, and the like) may function as the communication terminal device 30.

### (Trained model management device configuration)

The following is a detailed description of components of the trained model management device 10. The communicator 11 includes at least one communication module configured to connect to the network 40. The communicator 11 may include, for example, a communication module compatible with a mobile communication standard such as 4G (fourth generation) or 5G (fifth generation). The communicator 11 may include, for example, a communication module compatible with a wired LAN standard (1000 BASE-T as an example). The communicator 11 may include, for example, a communication module compatible with a wireless LAN standard (IEEE 802.11 as an example).

The first storage 12A and the second storage 12B are at least one memory. The memory may be any memory, including but not limited to semiconductor memory, magnetic memory, or optical memory, for example. The first storage 12A and the second storage 12B may be built into the trained model management device 10, for example, and may be configured to be accessed externally from the trained model management device 10 via any interface. The first storage 12A and the second storage 12B may be configured as separate storage areas of the same memory. The first storage 12A and the second storage 12B may each be physically different memories.

At least one of the first storage 12A or the second storage 12B stores various data used in various calculations executed by the controller 13. Further, at least one of the first storage 12A or the second storage 12B may store results and intermediate data of various calculations executed by the controller 13.

The first storage 12A and the second storage 12B are accessed by the trained model generation device 20 as described above. That is, the first storage 12A and the second storage 12B are shared by the trained model management device 10 and the trained model generation device 20. The first storage 12A and the second storage 12B also store a model group (multiple models) and the like. The first storage 12A stores master models. The second storage 12B stores custom models.

The controller 13 is at least one processor. The processor may be, but is not limited to, a general-purpose processor or a dedicated processor specialized for particular processing, and may be any processor. The controller 13 controls overall operation of the trained model management device 10.

Here, the trained model management device 10 may have the following software configuration. At least one program used to control operation of the trained model management device 10 is stored in the first storage 12A or the second storage 12B. The at least one program, when read by the processor of the controller 13, causes the controller 13 to function as the update determination unit 131, the update processing unit 132, and the detection unit 133.

When a custom model is generated, the update determination unit 131 determines whether or not to update a master model based on the corresponding training data. According to the present embodiment, the update determination unit 131 determines that a master model is to be updated when, for example, the update determination unit 131 determines that the target object to be added is highly versatile, that is, when identification targets can be expanded through updating and can be used generally. As another example, the update determination unit 131 may determine that a master model is to be updated without making a determination of versatility when an update instruction is received from an administrator of the model group (for example, the model supplier). Further, for example, the update determination unit 131 may determine that a master model is to be updated when recognition accuracy of a recognition target can be improved by the training data used to generate a custom model.

The update processing unit 132 executes processing related to updating master models. In more detail, the update processing unit 132 updates a master model by, for example, causing the trained model generation device 20 execute machine learning (retraining) when the update determination unit 131 determines that the master model is to be updated. Machine learning (retraining) is executed using the training data used in the generation of the master model (first training data) and the training data used in the generation of the custom model (second training data). According to the present embodiment, the trained model generation device 20 executes the update of the master model according to the update instructions of the update processing unit 132, but as another example, the update processing unit 132 may execute the update of the master model.

Further, the update processing unit 132 may execute a task using the updated master model and present an execution result of the task to a user. According to the present embodiment, the task is recognition of a target object. Based on a result presented, a user may evaluate, for example, precision and recall to check whether the updated master model is inferior to the custom model.

Further, when determining that a master model is to be updated, the update processing unit 132 may update data indicating a contribution level of a user stored in the second storage 12B. When the second training data of a user is used to update the master model, the contribution level of the user is increased (for example, points are added). The contribution level may expand the authority of the user to use the master model and custom models according to the magnitude of the contribution level.

The detection unit 133 detects whether a user who generated a custom model uses the updated master model instead of the custom model. The detection unit 133 may determine that a user who generated a custom model uses the updated master model instead of the custom model when the user performs an operation to create a new use environment. An operation to create a new use environment is, for example, to download a trained model when adding a new work (recognition of another target object), and make a new setting to deploy on the communication terminal device 30. The detection unit 133 may determine that a user who generated a custom model continues to use the custom model when the user continues to use the previous use environment.

### (Communication terminal device configuration)

Components of the communication terminal device 30 are described in detail below. The communicator 31 includes at least one communication module configured to connect to the network 40. The communicator 31 may include a communication module compatible with a mobile communication standard such as 4G or 5G, for example. The communicator 31 may include a communication module compatible with a LAN standard. The communicator 31 may include the same communication module as the communicator 11, and may include a different communication module.

The storage 32 includes at least one memory. The memory may be any memory, including but not limited to semiconductor memory, magnetic memory, or optical memory, for example. The storage 32 stores various data used in various calculations executed by the controller 33. Further, the storage 32 may store results and intermediate data of various calculations executed by the controller 33. For example, the storage 32 may temporarily store input information that is generated by the input information generator 34 and sent (uploaded) to the trained model management device 10. Further, for example, the storage 32 may temporarily store a result of target object recognition acquired from the trained model management device 10 via the communicator 31.

The controller 33 is at least one processor. The processor may be, but is not limited to, a general-purpose processor or a dedicated processor specialized for particular processing, and may be any processor. The controller 33 controls overall operation of the communication terminal device 30.

The input information generator 34 generates input information. According to the present embodiment, the input information is an image including the target object to be identified. The input information generator 34 may include an imaging unit such as a camera, for example. According to the present embodiment, the input information generator 34 is a camera. For example, a user may generate input information by capturing an image including a new target object with the camera of the communication terminal device 30. The input information may be evaluation data used to check that a custom model is capable of recognizing a new target object.

The user interface 35 inputs information from a user and outputs information to the user. The user interface 35 includes, for example, a touch sensor. The touch sensor detects contact with a user's finger, stylus pen, or the like, and specifies a contact position. The touch sensor may be integrated with a display to form a touch panel display. According to the present embodiment, the user interface 35 is a touch panel display. Presentation content from the trained model management device 10 is displayed on the touch panel display. The user interface unit 35 may display a chat screen or the like to prompt a user to input evaluation data and the second training data, for example.

### (Model group)

According to the present embodiment, the model group stored in the first storage 12A and the second storage 12B is classified as illustrated in FIG. 3. The model group is broadly classified into master models and custom models. A master model is, for example, a trained model available to all users. A master model is, for example, a highly versatile trained model. A master model is, for example, a model generated by the administrator of the model group. A custom model is, for example, a trained model generated by a specific user. A custom model may, for example, be a trained model available only to a specific user. A custom model, for example, is superior to a master model in recognition of a specific target object and in recognition of a target objects in a specific environment.

Here, as described above, according to the present embodiment, users include the first user and the second user. The following explanation assumes that the second user generates a custom model, and that a master model is a trained model available to the first user and the second user. Further, the custom model generated by the second user may be a trained model available only to the second user. Further, when a custom model generated by the first user exists, the custom model of the first user may be available only to the first user. In such a case, the custom model of the first user may be excluded from the library (available models) of the second user. In other words, the library of the second user may consist of a master model and a custom model generated by the second user. For example, one user (for examples, the second user) may generate multiple custom models.

As illustrated in FIG. 3, master models include general-purpose models and specialized models. A general-purpose model is a model for recognizing a target object in a large category (first category). A specialized model is a model for recognizing a target object in a smaller category (second category). The second category is a subdivision of one item in the first category.

Further, as described above, a custom model is generated by the second training data prepared by a user. In detail, a custom model is generated based on a master model and the second training data. That is, according to the present embodiment, a custom model is generated using a master model that already exists. A custom model may be generated, for example, by executing additional training on a master model that already exists using the second training data. Therefore, a custom model is associated with the master model on which the custom model was based. Such association between master model and custom model is stored in the first storage 12A and the second storage 12B as relation information. That is, the first storage 12A and the second storage 12B store relation information that defines association between multiple models.

In the example in FIG. 3, the first category is industrial components, stationery, and the like. The second category is bolts, nuts, pens, scissors, and the like. For example, the general-purpose model "INDUSTRIAL COMPONENTS" is a trained model for recognition of bolts, nuts, springs, and the like. For example, the specialized model "BOLTS" is a trained model for recognition of bolt types, such as Bolt A, Bolt B, Bolt C, and the like. The specialized models "BOLTS" and "NUTS" are associated with the general-purpose model "INDUSTRIAL COMPONENTS". The relation information may include such association between a general-purpose model and a specialized model.

Here, for example, the second user may generate a custom model using the specialized model "BOLTS" in order to add "BOLT C'", an improved product of "BOLT C", as an identification target. In the example in FIG. 3, the custom model "BOLTS" of the second user is a trained model for recognition of bolt types: Bolt A, Bolt B, Bolt C', and the like.

Further, a custom model is stored separately from master models when available only to the user who generated the custom model. According to the present embodiment, a custom model is available only to the user who generated the custom model. Therefore, the first storage 12A stores a master model and the first training data used to generate the master model. The second storage 12B stores a custom model and the second training data used to generate the custom model. Further, in the second storage 12B, the storage area may be divided for each user. As another example, the trained model management device 10 may include a different storage for each user. For example, the second storage 12B may store only a custom model generated by the second user and available only to the second user. The trained model management device 10 may include a separate third storage that is different from both the first storage 12A and the second storage 12B and only available to the first user.

### (Trained model management method)

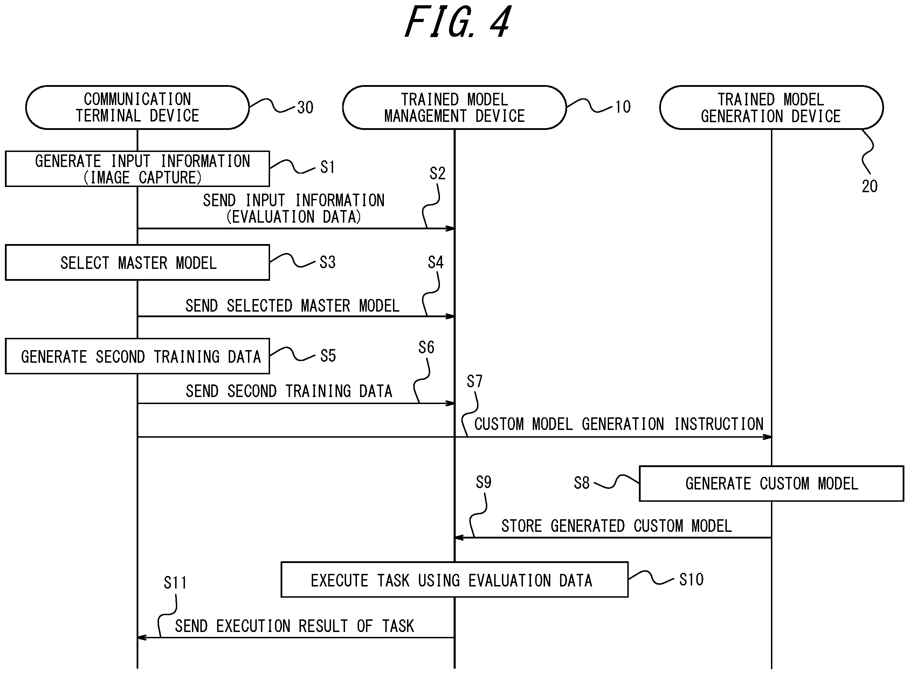

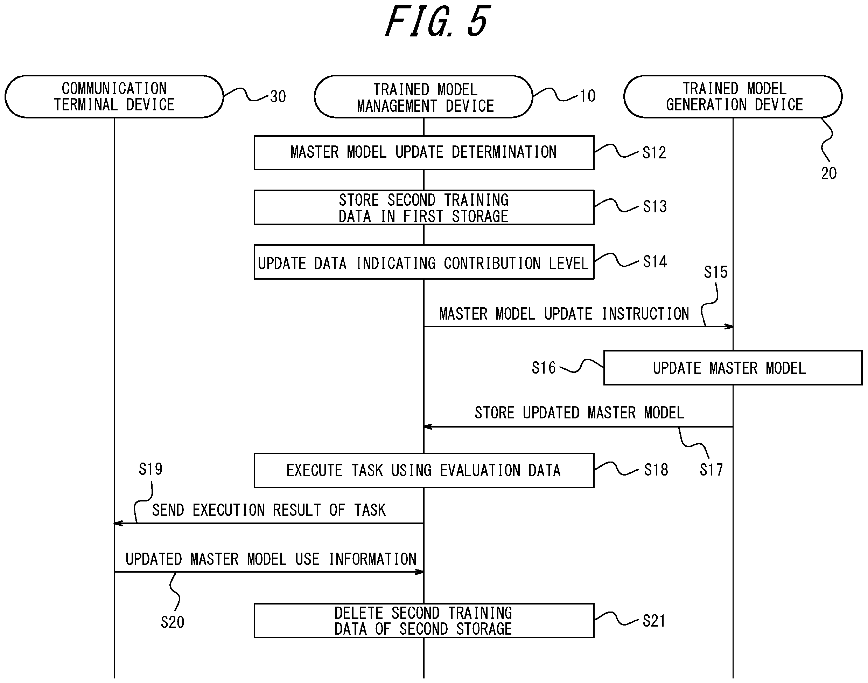

FIG. 4 and FIG. 5 are sequence diagrams illustrating an example of processing procedure in the trained model management system 1. FIG. 5 illustrates procedure executed following FIG. 4. Referring to FIG. 4 and FIG. 5, processing of the trained model management method executed by the trained model management device 10 is described. Similarly to the example described above, a specific example is used of the second user generating a custom model to be able to recognize "BOLT C'" from an image including "BOLT C'" and other industrial components, using specific examples as appropriate.

The user uses a camera of the communication terminal device 30 to image capture the "BOLT C'" and other industrial components to generate a captured image as input information (step S1). The captured image is evaluation data used to evaluate a task execution result when a task to recognize "BOLT C'" is executed using a custom model or the like. Evaluation data is information prepared by the second user about a target object that is made recognizable using the second training data.

The communication terminal device 30 sends the input information (evaluation data) to the trained model management device 10 (step S2). The second storage 12B of the trained model management device 10 stores evaluation data.

The user selects a master model and inputs the master model into the communication terminal device 30 (step S3). The user may, for example, select a master model that has been previously used in the robot control system 100. To illustrate with a specific example, the second user selects the specialized model "BOLTS" that was previously used.

The communication terminal device 30 sends the user-selected master model to the trained model management device 10 (step S4). To illustrate with a specific example, the communication terminal device 30 sends information to the trained model management device 10 that the master model selected by the second user is the specialized model "BOLTS". An association between a custom model generated by the second user and the specialized model "BOLTS" is stored in the first storage 12A and the second storage 12B as relation information.

The user generates the second training data to generate a custom model (step S5). The second training data, like the evaluation data, may be created by capturing an image of the "BOLT C'" and other industrial components using the camera of the communication terminal device 30. The second training data may be created using "BOLT C'" computer aided design (CAD) data. The second training data may be created by combining training data from image capture and training data from CAD.

The communication terminal device 30 sends the second training data to the trained model management device 10 (step S6). The second training data is stored in the second storage 12B of the trained model management device 10.

Further, the communication terminal device 30 instructs the trained model generation device 20 to generate a custom model (step S7).

The trained model generation device 20 generates a custom model based on the user-selected master model and the second training data prepared by the user (step S8). To illustrate with a specific example, the trained model generation device 20 uses the specialized model "BOLTS" to execute machine learning using the second training data stored in the accessible second storage 12B to generate a custom model "BOLTS" that is only usable by the second user.

The trained model generation device 20 stores the generated custom model in the second storage 12B of the trained model management device 10 (step S9).

The update processing unit 132 of the trained model management device 10 executes a task (target object recognition) using the evaluation data and the generated custom model (step S10).

The update processing unit 132 of the trained model management device 10 sends the execution result of the task to the communication terminal device 30 (step S11). The execution result of the task is displayed on the user interface 35 (touch panel display) of the communication terminal device 30.

The user may evaluate the execution result of the task, and when the evaluation does not meet expectation, the second training data may be changed to regenerate the custom model. Further, step S10 and step S 11 may be omitted, for example, by user instruction.

The update determination unit 131 of the trained model management device 10 determines whether or not to update the master model based on the second training data. According to the present embodiment, the update determination unit 131 determines that the master model is to be updated because the target object to be added ("BOLT C'", an improved product of "BOLT C") is highly versatile (step S12). Here, for example, when the shape of "BOLT C'" is closer to a spring than a conventional bolt, and training will clearly reduce precision, the update determination unit 131 may determine not to update the master model. Further, the decision may be made by the administrator of the model group, as described above.

Here, among the plurality of master models the update determination unit 131 may specify a portion of the master models to be updated by training using the second training data, based on the update information. Information on the specified portion of the master models may be output to the update processing unit 132. As another example, the update determination unit 131 may specify a trained model generated using the first training data in which the target object to be made recognizable by training (for example, "BOLT A", "BOLT B", "BOLT C", ...) is identical or similar to that of the second training data (for example, "BOLT C') as a master model to be updated. Alternatively, as another example, the update determination unit 131 may specify the master model used in generating the custom model as a master model to be updated. The update processing unit 132 updates the master model that is the trained model specified by the update determination unit 131.

The update processing unit 132 of the trained model management device 10 stores the second training data in the first storage 12A when the update determination unit 131 determines that the master model is to be updated (step S13). That is, the second training data is used in updating the master model, and therefore the update processing unit 132 copies the second training data to the first storage 12A. When determination is made that the master model is to be updated, the first storage 12A stores the second training data as well as the first training data.

Further, when determination is made that the master model is to be updated, the update processing unit 132 of the trained model management device 10 updates the data indicating the contribution level of the second user stored in the second storage 12B (step S14). As described above, the contribution level expands the authority of the second user to use the master model and custom models according to the magnitude of the contribution level. For example, the second storage 12B also stores capacity, usage fee, usable count, and usable period of the second storage 12B with respect to the second user. The update processing unit 132 may favorably set the capacity, usage fee, usable count, and usable period of the second storage 12B according to the contribution level. Accordingly, the user is given an incentive to have the second training data used in generating the custom model be used to update the master model.

The update processing unit 132 of the trained model management device 10 instructs the trained model generation device 20 to update the master model (step S15).

The trained model generation device 20 updates the master model by training (retraining) using the first training data and the second training data stored in the first storage 12A (step S 16). To illustrate with a specific example, the trained model generation device 20 retrains the specialized model "BOLTS" to be able to also identify "BOLT C'". The specialized model "BOLTS" is a master model, and therefore available not only to the second user, but also to other users, including the first user.

The trained model generation device 20 stores the updated master model in the first storage 12A of the trained model management device 10 (step S17).

The update processing unit 132 of the trained model management device 10 executes a task (target object recognition) using the evaluation data and the updated master model (step S18).

The update processing unit 132 of the trained model management device 10 sends the execution result of the task to the communication terminal device 30 (step S19). The execution result of the task is displayed on the user interface 35 (touch panel display) of the communication terminal device 30.

The user may evaluate the execution result of the task, and when the evaluation does not meet expectation, the user may continue to use the custom model instead of using the updated master model. When the user decides, based on the evaluation, to use the updated master model, the user may, for example, download the updated master model by performing an operation to create a new use environment. When the user performs such an operation, the communication terminal device 30 sends the information to the trained model management device 10 as updated master model use information (step S20). The information is detected by the detection unit 133 of the trained model management device 10.

Here, the user may cause the input information entered by the robot 2 using the master model or the custom model to be stored in the first storage 12A or the second storage 12B and use the input information to evaluate the updated master model. Further, the user may cause the data used to confirm or evaluate the training effect used in the generation of a previous master model or custom model to be stored in the first storage 12A or the second storage 12B, and use the data to evaluate the updated master model. Further, the evaluation of the updated master model is not limited to that performed by the user, and may be executed automatically by the trained model management device 10, for example.

The master model before updating, at the time of updating, and after updating may be stored in the first storage 12A. As a result, even when there is a defect in the updated master model, the master model before updating may be used to cause the robot 2 to execute work or to execute update processing again.

The update processing unit 132 of the trained model management device 10 deletes the second training data stored in the second storage 12B when the user uses the updated master model (step S21). By deleting the second training data that has a relatively large size, the free space in the second storage 12B is increased, allowing the user to reduce fees based on capacity used, for example. Further, the trained model management device 10 may eliminate an increase in capacity caused by the existence of a large amount of training data for generating custom models.

Here, the update processing unit 132 does not delete the evaluation data stored in the second storage 12B even when the second user uses the updated master model instead of the custom model. This is because the evaluation data is relatively small in size and is considered more likely to be used again by the user than the second training data.

As described above, the trained model management device 10 and the trained model management method according to the present embodiment are able to update a master model without degrading recognition accuracy in the use environment of a user.

The above describes an example in which a user determines to update a master model when generating a custom model, but this is not a limitation. That is, for example, when a user uses a master model at the factory or the like of the user, the recognition accuracy of the master model may be reduced because the environment in which the master model was created is different from the use environment of the user. In order to improve the accuracy of a master model, an optimized master model (second model or second master model) may be generated based on the master model (first model or first master model) by training data acquired in the use environment of the user or by training data that mimics the use environment of the user. That is, according to the present disclosure, when the second master model is generated, the update determination unit 131 may determine whether to update the first master model based on the training data used to train the second master model. The second master model may be generated by connecting the first master model with an additional trained model that has undergone a training process regarding the use environment of the user. The additional trained model may also be referred to as an adapter module, for example.

The second master model is a model with no restriction on user usage, and is therefore stored in the first storage 12A, just like the first master model. The second master model may also be referred to as a custom model with no restriction on user usage. Therefore, according to the present disclosure, to the extent that no contradiction arises, a custom model of the embodiment described above may be read as the second master model and applied accordingly.

The trained model management device 10 and the trained model management method according to an embodiment are described above, but the present disclosure may also be implemented as a system, a program, or a storage medium on which the program is recorded. A storage medium is, as an example, an optical disk, a magneto-optical disk, a CD-ROM, a CD-R, a CD-RW, a magnetic tape, a hard disk, a memory card, or the like.

Further, a program embodiment is not limited to an application program such as object code compiled by a compiler or program code executed by an interpreter, and may be a program module or the like incorporated into an operating system. Further, a program may or may not be configured so that all processing is performed only in a CPU on a control board. A program may be configured to be implemented in whole or in part by another processing unit mounted on an expansion board or expansion unit added to a board as required.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component or the like may be rearranged, and multiple components or the like may be combined into one or divided, as long as no logical inconsistency results.

The components and processing steps described in the present disclosure may be combined arbitrarily, except in combinations where features are mutually exclusive. Further, each of the features described in the present disclosure may be replaced by alternative features that work for the same, equivalent, or similar purposes, unless explicitly contradicted. Therefore, unless explicitly contradicted, each of the disclosed features is merely an example of a comprehensive set of identical or equivalent features.

Further, embodiments according to the present disclosure are not limited to any of the specific configurations of the embodiments described above. The embodiments according to the present disclosure may be extended to all novel features described, or combinations thereof, or all novel methods or processing steps described, or combinations thereof.

In the present disclosure, "first", "second", and the like are identifiers to distinguish such configurations. Configurations distinguished by "first", "second", and the like in the present disclosure may be interchangeably numbered. For example, a first category may exchange identifiers "first" and "second" with a second category. Such exchange of identifiers takes place simultaneously. Even after such an exchange of identifiers, relevant configurations remain distinct. Identifiers may be eliminated. Configurations with an identifier eliminated are distinguished by a reference sign. The description of identifiers such as "first" and "second" in the present disclosure may not be used as a sole basis for interpreting an assigned order of such configurations or determining the existence of identifiers with smaller ordinal numbers. For example, an interchange of the "first" and "second" identifiers in the claim description, such as first model and second model, is also included in the scope of the present disclosure.

### REFERENCE SIGNS LIST

- 1: trained model management system
- 2: robot
- 2A: arm
- 2B: end effector
- 4: camera
- 5: influence zone
- 6: work start point
- 7: work target point
- 8: work target object
- 10: trained model management device
- 11: communicator
- 12A: first storage
- 12B: second storage
- 13: controller
- 20: trained model generation device
- 30: communication terminal device
- 31: communicator
- 32: storage
- 33: controller
- 34: input information generator
- 35: user interface
- 40: network
- 100: robot control system
- 110: robot control device
- 131: update determination unit
- 132: update processing unit
- 133: detection unit

## Claims

1. A trained model management device comprising:
a first storage storing first training data and a first model that is a trained model that has been trained to recognize, based on the first training data, a target object included in input information;
a second storage storing second training data and a second model that is a trained model generated based on the second training data and the first model; and
an update determination unit that makes a determination as to whether or not to update the first model based on the second training data when the second model is generated.

2. The trained model management device according to claim 1, wherein
the first model is a master model available to a first user and a second user different from the first user, and
the second model is a custom model available only to the second user.

3. The trained model management device according to claim 2, wherein the second storage is available only to the second user.

4. The trained model management device according to claim 2 or 3, wherein
the detection unit detects whether the second user uses the master model that has been updated instead of the custom model,
when the determination is made that the master model is to be updated, the second training data is stored in the first storage, and
when the second user uses the master model that has been updated instead of the custom model, the second training data stored in the second storage is deleted.

5. The trained model management device according to any one of claims 2 to 4, wherein
the second storage stores evaluation data that is information prepared by the second user about the target object that is made recognizable by the second training data, and
recognition of the target object is executed using the master model that has been updated with the evaluation data as the input information, and a result of the recognition is presented to the user.

6. The trained model management device according to claim 5, wherein the evaluation data stored in the second storage is not deleted even when the second user uses the master model that has been updated instead of the custom model.

7. The trained model management device according to any one of claims 2 to 6, wherein
when the determination is made that the master model is to be updated, data indicating a contribution level of the second user stored in the second storage is updated, and
the contribution level expands the authority of the second user to use the master model and the custom model according to magnitude of the contribution level.

8. The trained model management device according to any one of claims 2 to 7, wherein the update determination unit makes the determination that the master model is to be updated upon determining, based on the second training data, that the target object to be added is highly versatile.

9. The trained model management device according to any one of claims 2 to 8, wherein
the master model includes a plurality of different trained models,
the update determination unit specifies a portion of the trained models to be updated by training using the second training data, and
the master model is updated by updating the portion of the trained models specified by the update determination unit.

10. The trained model management device according to claim 9, wherein the update determination unit specifies, as the portion of the trained models to be updated by training using the second training data, the trained models generated using the first training data in which the target object to be made recognizable by training is identical or similar to that of the second training data.

11. The trained model management device according to any one of claims 1 to 8, further comprising an update processing unit that executes update processing of the second model based on the first training data and the second training data when updating the second model.

12. The trained model management device according to claim 2, wherein the second storage further stores a custom model available only to a third user.

13. A trained model management method executed by a trained model management device comprising: a first storage storing first training data and a first model that is a trained model that has been trained to recognize, based on the first training data, a target object included in input information; and a second storage storing second training data and a second model that is a trained model generated based on the second training data and the first model, the trained model management method comprising:
determining whether or not to update the first model based on the second training data when the second model is generated.
